(19) Europäisches Patentamt
European Patent Office
Office européen des brevets

(11) Veröffentlichungsnummer : **0 083 084**
**B1**

# (12) EUROPÄISCHE PATENTSCHRIFT

(45) Veröffentlichungstag der Patentschrift : **16.04.86**

(51) Int. Cl.⁴ : **C 08 L 59/02**, C 08 K 5/42, C 08 K 3/26, C 08 K 9/04

(21) Anmeldenummer : **82111956.7**

(22) Anmeldetag : **23.12.82**

## (54) Füllstoff enthaltende Kunststoff-Formmasse, Verfahren zu ihrer Herstellung sowie deren Verwendung.

(30) Priorität : **29.12.81 DE 3151814**

(43) Veröffentlichungstag der Anmeldung : **06.07.83 Patentblatt 83/27**

(45) Bekanntmachung des Hinweises auf die Patenterteilung : **16.04.86 Patentblatt 86/16**

(84) Benannte Vertragsstaaten : **AT BE CH DE FR GB IT LI NL SE**

(56) Entgegenhaltungen :
**DE-A- 2 910 586**
**GB-A- 1 025 675**
**US-A- 3 255 060**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Lüders, Walter, Dr.**
**Am Forsthaus Gravenbruch 49**
**D-6078 Neu-Isenburg (DE)**
Erfinder : **Burg, Karlheinz, Dr.**
**Eichenweg 18**
**D-6200 Wiesbaden (DE)**

**EP 0 083 084 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Thermoplastische Formassen auf Basis von Polyoxymethylen, d. h. von Oxymethylen-Homopolymeren und Oxymethylen-Copolymeren sind seit langem als Werkstoffe bekannt, die vor allem auf technischem Sektor Anwendung gefunden haben. Es ist weiterhin bekannt, daß sich bestimmte mechanische, elektrische und thermische Eigenschaften von Kunststoffen durch Zusatz anorganischer Füllstoffe verbessern lassen. Diese Füllstoffe zeigen jedoch nur eine geringe Verträglichkeit mit den Polymeren. Das führt bei mit anorganischen Substanzen gefüllten Polymeren unter anderem zu einer Verschlechterung einiger mechanischer Eigenschaften.

Häufig werden gefüllten Kunststoff-Formassen Haftvermittler eingearbeitet, damit der Einbau des Füllstoffs in das Polymere gefördert wird. Die gebräuchlichen Haftvermittler für gefüllte Kunststoff-Formassen sind Organosilane, die mit gutem Erfolg zu Polymeren, die Silikatische Füllstoffe enthalten, zugesetzt werden. Bei Systemen mit Calciumcarbonat als Füllstoff sind gesättigte oder ungesättigte Fettsäuren, Salze oder Derivate dieser Säuren, oder auch Organotitanate als Haftvermittler bekannt.

Stand der Technik ist auch die Verwendung schwefel- und phosphororganischer Verbindungen als Haftvermittler bei kreidegefüllten Polyolefinen (vgl. DE-OS 29 10 586 und DE-OS 27 35 160).

Ein Zusatz beispielsweise von Kreide zu Polyoxymethylen führt bei daraus hergestellten Formkörpern erwartungsgemäß zu einer Verbesserung der Steifigkeit und der Härte. Andererseits bedingt aber die Kreide u. a. eine orhebliche Verschlechterung der Zähigkeitseigenschaften, was eine Verwendung dieser Mischungen für viele Anwendungszwecke einschränkt. Außerdem treten in der Regel Verfärbungen auf.

Aufgabe der vorliegenden Erfindung ist es, eine Formmasse auf Basis von Polyoxymethylen, d. h. von Oxymethylen-Homopolymeren und Oxymethylen-Copolymeren, mit einem Füllstoffmaterial bereitzustellen, welche die Nachteile des Standes der Technik nicht oder nur in deutlich geringerem Maße besitzt und bei der insbesondere daraus hergestellte Formkörper bessere mechanische Eigenschaften, vor allem hinsichtlich der Zähigkeit aufweisen sowie verbesserte Farbeigenschaften besitzen.

Zur Lösung dieser Aufgabe werden bestimmte schwefelorganische Verbindungen als Haftvermittler vorgeschlagen.

Die Erfindung betrifft demnach eine Formmasse auf Polyoxymethylenbasis bestehend aus

90-20 Gewichtsteilen eines Polyoxymethylens

10-80 Gewichtsteilen eines Erdalkalicarbonats, gegebenenfalls üblichen Zusatzstoffen sowie 0,1-10 Gew.-%, bezogen auf das Erdalkalicarbonat eines Haftvermittlers, dadurch gekennzeichnet, daß sie als Haftvermittler eine schwefelorganische Verbindung der Formel

$$R—SO_3—Me \qquad (I)$$

enthält, worin R für folgende Reste steht: geradkettiger oder verzweigter Alkylrest mit 6 bis 35 Kohlenstoffatomen oder ein Cycloalkylrest oder Alkenylrest mit jeweils 6 bis 22 Kohlenstoffatomen, wobei der Alkenylrest mindestens eine Doppelbindung enthält und alle diese Peste durch Hydroxygruppen oder die Reste $—OCOR^1$ oder $—COOR^1$, in denen $R^1$ einen geradkettigen oder verzweigten Alkylrest mit 1 bis 6, vorzugsweise 1 bis 3 Kohlenstoffatomen darstellt, substituiert sein können, Alkylarylrest mit 7 bis 22 Kohlenstoffatomen, der in vorstehender Weise substituiert sein kann, $R^2—O(CH_2CH_2O)_m—$, worin $R^2$ einen Alkylrest mit 6 bis 22 Kohlenstoffatomen und m gleich 1 bis 4 bedeutet, $R^2—CO—O—(CH_2)_n—$, worin $R^2$ die vorstehende Bedeutung hat und n gleich 2 bis 6 ist,

$$R^2\ -CO-\underset{\displaystyle R_3}{\underset{|}{N}}-(CH_2)_n,$$

worin $R^2$ und n die vorstehende Bedeutung haben, und $R_3$ für Wasserstoff oder einen geradkettigen oder verzweigten Alkylrest mit 1 bis 6, vorzugsweise 1 bis 3 Kohlenstoffatomen steht, und Me ein Alkali- oder Erdalkalimetallion bedeutet.

Die Erfindung betrifft weiterhin ein Verfahren zur herstellung dieser Formmasse sowie deren Verwendung zur Herstellung von Formteilen.

Die erfindungsgemäß als Haftvermittler eingesetzten schwefelorganischen Verbindungen sind entsprechend der obigen Formel (I) Alkali- oder Erdalkalisalze von bestimmten Sulfonsäuren bzw. Alkylschwefelsäuren.

In dieser Formel (I) steht R vorzugsweise für die folgenden Reste:

Gerardkettiger oder verzweigter Alkylrest und 6 bis 22, insbesondere 10 bis 17 Kohlenstoffatomen, gegebenenfalls substituiert durch eine OH-, Acetoxygruppe; oder Carbalkoxygruppe in α-Stellung zur $So_3Me$-Gruppe; Cycloalkylrest mit 6 bis 10 Kohlenstoffatomen; Alkenylrest mit einer Doppelbindung oder zwei Doppelbindungen und 10 bis 17 Kohlenstoffatomen, Alkylarylrest mit 3 bis 16 Kohlenstoffatomen in der Alkylgruppe, insbesondere der Monoalkylphenylrest mit einer geradkettigen oder verzweigten Alkylgruppe von 8 bis 14 Kohlenstoffatomen, $R^2—O(CH_2CH_2O)—_m$ mit $R^2$ gleich 10 bis 14 Kohlenstoffatomen und m gleich 2 oder 3, $R^2—CO—O(CH_2)—_n$, worin $R^2$ die vorstehende Bedeutung und n gleich 2 oder 3 ist,

$$R^2-CO-\underset{\displaystyle R_3}{\underset{|}{N}}-(CH_2)_n,$$

Worin $R^2$ und n die vorstehende Bedeutung haben, und $R_3$ für Wasserstoff oder den Alkylrest mit 1 bis 3 Kohlenstoffatomen steht, Me bedeutet in der erwähnten Formel (I) vorzugsweise ein Alkalimetallion, insbesondere ein Natriumion.

Die erfindungsgemäß zu verwendenden Haftvermittler lassen sich nach bekannten Methoden darstellen.

So lassen sich die Alkylsulfonsäuren beispielsweise durch Sulfoxydation von aliphatischen Kohlenwasserstoffen, inklusive von Paraffinen oder bestimmten Mineralölschnitten, durch Umsetzung von Alkylhalogeniden mit Sulfiten oder durch Verseifung der durch Sulfochlorierung von Kohlenwasserstoffen entstehenden Alkylsulfochloride herstellen (Houben-Weyl, Methoden der Organischen Chemie, Bd. IX, Thieme Verlag, Stuttgart 1955).

Die den Alkali-alkylsulfaten zugrunde liegenden Säuren können beispielsweise durch Umsetzung der entsprechenden Alkohole mit Schwefeltrioxyd erhalten werden.

Ist R in der Formel (I) ein Acyloxy- oder Acylaminoalkylenrest, so lassen sich die den Alkalialkylsulfonaten zugrunde liegenden Säuren durch Kondensation von Carbonsäuren mit Oxalkylensulfonsäuren bzw. Aminoalkylensulfonsäuren auf bekannte Weise herstellen.

Geeignete Sulfonate sind beispielsweise die Kalium- und natriumsalze von Hexan-1-sulfonsäure, heptan-1-sulfonsäure, Octan-1-sulfonsäure, Octan-2-sulfonsäure, Nonan-2-sulfonsäure, nonan-5-sulfonsäure, Decan-1-sulfonsäure, Undecan-1-sulfonsäure, Dodecan-1-sulfonsäure, Dodecan-4-sulfonsäure, Tetradecan-1-sulfonsäure, hexadecan-1-sulfonsäure, octadecan-1-sulfonsäure, Dodecan-1-sulfonsäure, 2,4,4-Trimethyl-pent-1-en-1-sulfonsäure, hexadec-2-en-1-sulfonsäure, 2-Hydroxy-dodecan-1-sulfonsäure, 2-Hydroxy-tetradecan-1-sulfonsäure, 2-Hydroxy-hexadecan-1-sulfonsäure, 2-Acetoxydodecan-1-sulfonsäure, 2-Acetoxytetradecan-1-sulfonsäure, 2-(Octanoyloxy)-ethan-1-sulfonsäure, 2-(Undecanoyloxy)-ethan-1-sulfonsäure, 2-(Dodecanoyloxy)-ethan-1-sulfonsäure, 2-(Tetradecanoyloxy)-ethan-1-sulfonsäure, 2-(Heptadecanoyloxy)-ethan-1-sulfonsäure, 2-(Oleoyloxy)-ethan-1-sulfonsäure, 2-(Undecanoylamino)-ethan-1-sulfonsfäure, 2-(Dodecanoyl-amino)-ethan-1-sulfonsäure, 2-(Tetradecanoylamino)-ethan-1-sulfonsäure, 2-(Heptadecanoylamino)-ethan-1-sulfonsäure, 2-(Heptadecadecanoyl-2-methylamino)-ethan-1-sulfonsäure, 2-(Octadecanoyl-2-methylamino)-ethan-1-sulfonsäure, 2-(Oleoylamino)-ethan-2-sulfonsäure, und die Kalium- und Natriumsalze der durch Sulfoxydation aliphatischer Kohlenwasserstoffgemische (Paraffine, Mineralölschnitte) leicht herstellbaren Sulfonsäuren mit verschiedener C-Kettenzahl.

Bevorzugt verwendet werden hexadec-2-en-1-sulfonsaures Natrium, 2-Hydroxy-dodecan-1-sulfonsaures Natrium, 2—Hydroxy-tetradecan-1-sulfonsaures Natrium, 2-Hydroxyhexadecan-1-sulfonsaures Natrium, 2-Acetoxy-dodecan-1-sulfonsaures Natrium, 2-Acetoxy-tetradecan-1-sulfonsaures Natrium, 2-(Oleoyloxy)-ethan-1-sulfonsaures Natrium, 2-(Undecanoyloxy)-ethan-1-sulfonsaures Natrium, 2-(Heptadecanoyloxy)-ethan-1-sulfonsaures Natrium, 2-(Tetradecaamino)-ethan-1-sulfonsaures Natrium und sekundäres $C_{13}$-$C_{18}$ n-alkansulfonsaures Natrium.

Geeignete Sulfate sind beispielsweise die Kalium- und Natriumsalze von
Schwefelsäure-mono-(2-dodecylether)-ethylenglykolester,
Schwefelsäure-mono-(octylether)-diethylenglykolester,
Schwefelsäure-mono-(hexadecylether)-ethylenglykolester,
Schwefelsäure-mono-(dodecylether)-diethylenglykolester,
Schwefelsäure-mono-(tetradecylether)-diethylenglykolester,
Schwefelsäure-mono-(hexadecylether)-diethylenglykolester,
Schwefelsäure-mono-(octadecylether)-diethylenglykolester,
Schwefelsäure-mono-(dodecylether)-triethylenglykolester,
Schwefelsäure-mono-(hexadecylether)-triethylenglykolester
und Schwefelsäure-mono-(dodecylether)-tetraethylenglykol-ester.

Bevorzugt verwendet werden das Natriumsalz des Schwefelsäure-mono-(dodecylether)-diethylenglykolester und das Natriumsalz des Schwefelsäure-mono-(dodecylether)-triethylenglykolesters.

Die erfindungsgemäß zu verwendenden Sulfonate und Sulfate werden der Formasse in einer Menge von 0,1-10 Gew.-%, vorzugsweise 0,5-2 Gew.%, bezogen auf das Erdalkalicarbonat, zugesetzt. Dabei können auch Mischungen verschiedener Sulfonate bzw. verschiedener Sulfate sowie Gemische zwischen diesen Substanzklassen zur Anwendung kommen.

Das als Füllstoff eingesetzte Erdalkalicarbonat kann ein natürliches oder synthetisches, d. h. ausgefälltes Erdalkalicarbonat sein. Geeignete Carbonate sind beispielsweise Kalksteinmehl, Kreide, gefälltes Calciumcarbonat, natürliches Magnesit, natürlicher Hydromagnesit, synthetisches basisches Magnesiumcarbonat, Calcium-Magnesium-Carbonat, Dolomit. Bevorzugt sind dabei die Calciumcarbonate. Die erfindungsgemäß verwendeten Erdalkalicarbonate haben im allgemeinen einen mittleren Teilchendurchmesser von 0,1-50 µm, vorzugsweise 1-10 µm. Es können auch Mischungen verschiedener Erdalkalicarbonate eingesetzt werden.

Das Einbringen der erfindungsgemäßen Haftvermittler in die Formmasse kann auf verschiedene Weise erfolgen.

So kann man den Füllstoff in einem organischen Lösungsmittel suspendieren, den Haftvermittler direkt oder in einem geeigneten Lösungsmittel gelöst zusetzen, das Gemisch bei Raumtemperatur oder erhöhter Temperatur gut durchrühren, das Lösungsmittel abdestillieren und den Rückstand trocknen. Man kann den Füllstoff aber auch mit dem Haftvermittler in einem Mischer bei Raumtemperatur oder bei erhöhter Temperatur, wobei die Temperatur gegebenenfalls oberhalb des Schmelzpunktes des Haftvermittlers liegt, durchmischen.

Ist der Haftvermittler flüssig, kann er direkt oder mit einem geeigneten Lösungsmittel verdünnt zu dem Füllstoff in einem Schnellaufmischer getropft oder auf einer Zerstäubungsvorrichtung in Form eines Nebels auf den Füllstoff gesprüht werden. Auf diese Weise können auch feste Haftvermittler in einem geeigneten Lösungsmittel gelöst auf den Füllstoff gebracht werden.

Alternativ kann der Haftvermittler in einem Mischer mit dem Polymeren vermischt und anschließend der unbehandelte Füllstoff zugegeben werden, oder es können alle drei Komponenten, nämlich das Polymere, der Füllstoff und der Haftvermittler gleichzeitig vermischt werden. Dieses gleichzeitige Mischen kann in einem Vormischer, jedoch auch im Granulierextruder erfolgen. Vorzugsweise wird zunächst der Füllstoff mit dem Haftvermittler behandelt.

Der Füllstoff wird dem Polymer in einer Menge von 10-80 Gew.-Teilen, vorzugsweise 30-70 Gew.-Teilen zugemischt.

Für die erfindungsgemäßen kunststoff-Formmassen eignen sich als Basispolymere die bekannten Polyoxymethylene, insbesondere Homopolymere von Formaldehyd oder Trioxan oder Trioxancopolymere, die vorzugsweise eine lineare Struktur aufweisen.

Homopolymere von Formaldehyd oder Trioxan sind dabei solche formaldehyd- oder Trioxan-Homopolymere, deren hydroxyl-Endgruppen in bekannter Weise chemisch, z. B. durch Veresterung oder Veretherung, gegen Abbau stabilisiert sind.

Unter Trioxan-Copolymeren sind Copolymere aus Trioxan und cyclischen Ethern, cyclischen Acetalen und/oder linearen Polyacetalen zu verstehen, die primäre Alkoholgruppen aufweisen.

Als Comonomere kommen a) cyclische Ether mit 3, 4 oder 5, vorzugsweise 3 Ringgliedern, b) von Trioxan verschiedene cyclische Acetate mit 5-11, vorzugsweise 5, 6, 7 oder 8 Ringgliedern und c) lineare Polyacetale, jeweils in Mengen von 0,1-20, vorzugsweise 0,5-10 Gew.-% in Frage. Am besten eignen sich Copolymere aus 99-95 Gew.-% Trioxan und 1-5 Gew-.% einer der vorgenannten Cokomponenten.

Als Comonomere für Trioxan sind besonders Verbindungen der Formel

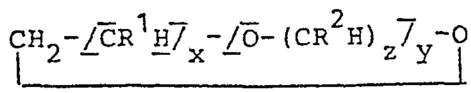

(II)

geeignet, inder (A) $R^1$ und $R^2$ gleich oder verschieden sind und jeweils ein Wasserstoffatom, einen aliphatischen Alkylrest mit 1-6, vorzugsweise 1, 2, 3 oder 4 Kohlenstoffatomen oder einen Phenylrest bedeuten und (a) x gleich 1, 2 oder 3 und y gleich Null ist oder (b) x gleich Null, y gleich 1, 2 oder 3 und z gleich 2 ist oder (c) x gleich Null, y gleich 1 und z gleich 3, 4, 5 oder 6 ist, oder (B) $R^1$ einen Alkoxymethylrest mit 2-6, vorzugsweise 2, 3 oder 4 Kohlenstoffatomen oder einen Phenoxymethylrest bedeutet, wobei x gleich 1 und y gleich Null ist.

Als cyclische Ether kommen vor allem Epoxide, z. B. Ethylenoxid, Propylenosid, Styroloxid, Cyclohexenoxid und Epichlorhydrin sowie Phenylglycidylether in Frage.

Als cyclische Acetale eignen sich vor allem cyclische Formale von aliphatischen oder cycloaliphatischen α, ω-Diolen mit 2-8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B. Glykolformal (1,3-Dioxolan), Propandiolformal (1,3-Dioxan), Butandiolformal (1,3-Dioxolan) Propandiolformal (1,3-Dioxan), Butandiolformal (1,3-Dioxepan), und Diglykolformal (1,3,6-Trioxocan) sowie 4-Chlormethyl-1,3-Dioxolan und Hexandiolformal (1,3-Dioxonan). Auch ungesättigte Formale wie Butendiolformal (1,3-Dioxacyclohepten-[5]) kommen in frage.

Als lineare Polyacetale sind sowohl Homo- oder Copolymere der vorstehend definierten cyclischen Acetale als auch lineare Kondensate aus aliphatischen oder cycloaliphatischen α, ω-Diolen mit aliphatischen Aldehyden, vorzugsweise Formaldehyd einsetzbar. Insbesondere werden Homopolymere cyclischer Formale von aliphatischen α, ω-Diolen mit 2-8, vorzugsweise 2, 3 oder 4 Kohlenstoffatomen verwendet, z. B. Poly-(1,3-dioxolan), Poly(1,3-dioxan)- und Poly(1,3-dioxepan).

Als zusätzliche Comonomere für Trioxan werden gegebenenfalls noch Verbindungen mit mehreren polymerisierbaren Gruppen im Molekül, z. B. Alkylglycidylformale, Polyglykoldiglycidylether, Alkandioldiglycidylether oder Bis(alkantriol)-triformale, verwendet, und zwar in einer Menge von 0,05-5, vorzugsweise 0,1-2 Gew.-%, bezogen auf die Gesamtmonomermenge.

Unter Alkylglycidylformalen sind Verbindungen der Formel (III) zu verstehen

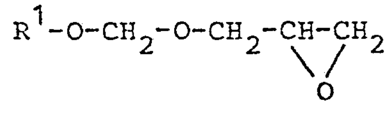

(III)

in der $R^1$ einen aliphatischen Alkylkrest mit 1-10, vorzugsweise 1-5 Kohlenstoffatomen bedeutet. Besonders gut geeignet sind Alkylglycidylformale der obigen Formel mit linearen, gesättigen aliphatischen Alkylresten, z. B. Methylglydicylformal, Ethylglycidylformal, Propylglycidylformal und Butylglycidylformal.

Als Polyglykoldiglycidylether werden Verbindungen der Formel (IV) bezeichnet

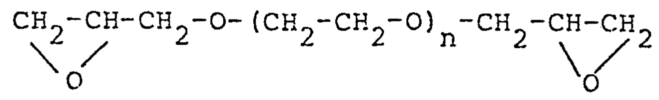

(IV)

in der n eine ganze Zahl von 2-5 bedeutet. Insbesondere eignen sich Polyglykoldiglycidylether der vorstehenden Formel, in der n 2 oder 3 bedeutet, z. B. Diethylenglykoldiglycidylether und Triethylenglykol-diglycidylether.

Als Alkandioldiglycidylether werden Verbindungen der Formel (V) bezeichnet

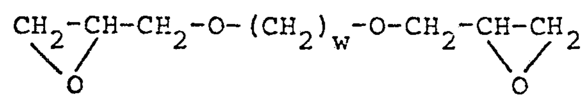

(V)

in der w eine ganze Zahl von 2-6, vorzugsweise 2, 3 oder 4 bedeutet.

Insbesondere geeignet ist Butandioldiglycidylether.

Unter Bis(alkantriol)-triformalen werden Verbindungen mit einer linearen und zwei cyclischen Formalgruppen verstanden, insbesondere Verbindungen der Formel (VI)

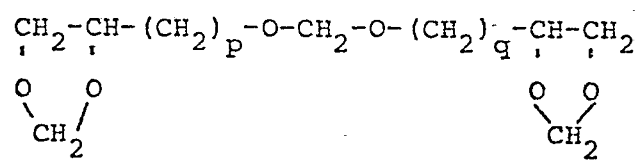

(VI)

in der p und q jeweils eine ganze Zahl von 3-9, vorzugsweise 3 oder 4, bedeuten. Es eignen sich vor allem symmetrische Bis-(alkantriol)-triformale der vorgenannten Formel, in der p und q die gleiche Zahl bedeuten, z. B. Bis-(1,2,5-pentantriol)-triformal und vorzugsweise Bis-(1,2,6-hexantriol)-triformal.

Die Werte für die reduzierte spezifische Viskosität (RSV-Werte) des Polyoxymethylens betragen im allgemeinen 0,3-2,0 $dl.gl^{-1}$, vorzugsweise 0,5-1,5 $dl.g^{-1}$ (gemessen in Butyrolacton, stabilisiert mit 2 gew.-% Diphenylamin bei 140 °C in einer Konzentration von 0,5 g/100 ml).

Die Kristallitschmelzpunkte der Polyoxymethylene liegen im Bereich von 140-180 °C, vorzugsweise 150-170 °C ; ihre Dichtenn betragen 1,38-1,45 $g.ml^{-1}$, vorzugsweise 1,40-1,43 $g.ml^{-1}$ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 100 °C, vorzugsweise zwischen 50 und 90 °C, hergestellt (vgl. z. B. US-Patentschrift 3 027 352). Als Katalysatoren werden hierbei beispielsweise Lewissäuren, z. B. Bortrifluorid und Antimonpentafluorid, und Komplex verbindungen von Lewissäuren, vorzugsweise Etherate, z. B. Bortrifluoriddiethyletherat und Bortrifluorid-di-tert.- butyl-etherat, verwendet. Ferner sind geeignet Protonensäuren, z. B. Perchlorsäure, sowie salzartige Verbindungen, z. B. Triphenylmethylhexaflurophosphat, triethyloxoniumtetrafluoroborat oder Acetylperchlorat. Die Polymerisation kann in Masse, Suspension oder Lösung erfolgen. Zur Entfernung instabiler Anteile werden die Copolymeren zweckmäßigerweise einem thermischen oder hydrolytischen kontrollierten, partiellen Abbau bis zu primären Alkoholendgruppen unterworfen (vgl. US-patentschriften 3 103 499 und 3 219 623).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. US-Patentschriften 2 768 994 und 2 989 505) und durch Veresterung oder Verätherung gegen den Abbau vom Kettenende stabilisiert.

Der gehalt der Formmassen an Polymer beträgt 90-20, vorzugsweise 70-30 Gew.-Teile.

Die erfindungsgemäße Formmasse enthält gegebenenfalls noch die bekannten Zusatzstoffe, insbesondere Stabilisatoren sowie Nukleierungsmittel, Antistatika, flammhemmende Mittel, Gleit- und Schmiermittel, Weichmacher, Pigmente, Farbstoffe, optische Aufheller oder Entformungshilfsmittel udgl.

Als Stabilisatoren gegen den Einfluß von Wärme eignen sich insbesondere Polyamide, Amide mehrbasiger Carbonsäuren, Amidine, z. B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2-20 Kohlenstoffatomen, z. B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7-13, vorzugsweise 7, 8 oder 9 Kohlenstoffatome aufweisen, mit Diolen, die 2-6 Kohlenstoffatome enthalten. Als Lichtstabilisatoren sind α-Hydroxybenzophenonderivate und Benzotriazolderivate geeignet. Die Stabilisatoren werden in einer Menge von insgesamt 0,1-5, vorzugsweise 0,5-3 Gew.-% (bezogen auf die gesamte Formasse) eingesetzt.

Formteile, hergestellt aus der erfindungsgemäßen thermoplastischen Formmasse, beispielsweise durch Extrusion oder Spritzguß, haben eine sehr gute Schlagzähigkeit und Schlagzugzähigkeit. Dadurch eignen sie sich besonders zur Herstellung technischer Artikel, wie Leisten, Rohre oder Maschinenteile, beispielsweise Gehäuse, Lagerelemente udgl. Weiterhin sind derartige Formteile überraschenderweise deutlich weniger verfärbt als entsprechende Formteile, die aus Polyoxymethylen/Erdalkalicarbonat (beispielsweise Calciumcarbonat)-Mischungen ohne Zusatz der erfindungsgemäßen Haftvermittler hergestellt wurden.

Ein weiterer Vorteil der erfindungsgemäßen Haftvermittler besteht darin, daß sie das Einzugssverhalten der Pulvermischung in den Extruder verbessern und das Fließverhalten der polymerschmelze günstig beeinflussen, was beim Homogenisierschritt im Extruder zu einem höheren Durchsatz führt und beim Spritzgießen die Herstellung komplizierter Spritzgußteile erleichtert.

Die Erfindung wird durch die nachstehenden Beispiele näher erläutert. Die in diesen Beispielen benutzten Größen wurden wie folgt bestimmt :

RSV-Wert : Messung in Butyrolactan, stabilisiert mit 2 Gew.-% Diphenylamin, bei 140 °C in einer Konzentration von 0,5 g/100 ml.

Dehnung und Zugfestigkeit nach DIN 53 455, Schlagzähigkeit (30 mm Backenabstand, Querlage) und Kerbschlagzähigkeit nach DIN 53 453, Schlagzugzähigkeit nach DIN 53 448.

Fallbolzenversuch (4 mm Platten) : Die jeweils zu prüfende Platte wird auf einer Auflagevorrichtung einer Schlagbeanspruchung dadurch ausgesetzt, daß man einen Fallhammer mit variablem Gewicht, dessen auftreffender Teil als Halbkugel mit einem Durchmesser von 9 mm ausgebildet ist, aus 1 m Höhe reibungslos senkrecht auf die Platte fallen läßt. Als Maß wird das Gewicht des Fallhammers angegeben, bei dem 50 % der Platten zerstört werden (Mittelwert aus 40 Fallversuchen).

Außer beim Fallbolzenversuch dient als Probekörper 1/2 Normstab.

Gelbwert nach DIN 6167.

## Beispiele

### Beispiel 1

800 Teile Calciumcarbonat vom Calcit-Typ mit einem mittleren Teilchendurchmesser von 3 μm und einer spezifischen Oberfläche (nach BET) von 2,5 $m^2/g$ werden in 3000 Teilen Ethanol suspendiert.

Unter gutem Rühren werden 12 Teile Natrium-hexadecan-2-en-1-sulfonat zugegeben. Die Suspension wird 3 Stunden bei Raumtemperatur nachgerührt, anschließend wird das Ethanol im Vakuum abdestilliert und der Rückstand bei 40 °C im Vakuumtrockenschrank getrocknet.

600 Teile des so behandelten Calciumcarbonats werden mit 900 Teilen eines Copolymerisats aus 98 Gew.-% Trioxan und 2 Gew,-% Ethylenoxid, das primäre Alkoholendgruppen aufweist und einen RSV-Wert von 0,8 $dl.g^{-1}$, eine Dichte von 1,41 $g.cm^{-3}$ und einen kristallitschmelzpunkt von 166 °C besitzt, stabilisiert mit 0,1 % Tricalciumcitrat, 0,02 % Dicyandiamid und 0,5 % 1,6-Bis-[β-(3,5-di-tert.-butyl-4-hydroxyphenyl)-propionyloxy]-hexan in einem Pflugschaufelmischer gut vermischt.

Das erhaltene Gemisch wird in einem Zweischneckenextruder zu einem Strang extrudiert, der dann in einer Schneidmaschine granuliert wird. Aus dem Granulat werden mit einer Spritzgußmaschine Prüfkörper hergestellt.

In einem Vergleichsbeispiel werden 600 Teile unbehandeltes Calciumcarbonat mit 900 Teilen Polyoxymethylen auf die gleiche Weise gemischt. Das Gemisch wird wie vorstehend beschrieben, weiterverarbeitet.

Die Eigenschaften der Prüfkörper sind in Tabelle I aufgeführt.

### Beispiele 2-9

800 Teile des gleichen Calciumcarbonats wie in Beispiel 1 werden in einem Schnellaufmischer mit 12 Teilen Haftvermittler gemäß Tabelle I bei 1200 U/min. für 10 Minuten bei Raumtemperatur gemischt. 600 Teile des so behandelten Calciumcarbonats werden mit 900 Teilen des ebenfalls gleichen Polyoxymethylens gemischt, und die Mischung wird wie in Beispiel 1 beschrieben weiterverarbeitet.

Die Eigenschaften der Prüfkörper sind aus Tabelle I ersichtlich.

### Beispiel 10

Zu 800 Teilen des gleichen Calciumcarbonats wie in Beispiel 1 wird aus einer Zerstäubungsvorrichtung eine Lösung von 12 Teilen eines sek. Na-n-alkansulfonats (Kettenverteilung : 3 % $C_{13}$, 25 % $C_{14}$, 30 %$C_{15}$, 25 % $C_{16}$, 15 % $C_{17}$, 2 % $C_{18}$) in 24 Teilen Wasser innerhalb 30 Minuten in einem Schnellaufmischer bei 1200 U/min gesprüht.

600 Teile des so behandelten Calciumcarbonats werden mit 900 Teilen des ebenfalls gleichen Polyoxymethylens gemischt, und die Mischung wird wie in Beispiel 1 beschrieben weiterverarbeitet.

Die Eigenschaften der Prüfkörper ergeben sich aus Tabelle I.

Beispiel 11

Das Beispiel 10 wird wiederholt, nur daß anstelle des sek. Na-n-alkansulfonats eine Lösung von 12 Teilen des Natriumsalzes von Schwefelsäure-mono-(dodecyläther)-diethylen-glykolester in 48 Teilen Wasser eingesetzt wird. Die Weiterverarbeitung des Gemisches erfolgt wie im Beispiel 1 beschrieben.

Die Eigenschaften der Prüfkörper sind in Tabelle I aufgeführt.

Beispiel 12

800 Teile des gleichen Calciumcarbonats wie in Beispiel 1 werden in einem auf 60 °C geheizten Schnellaufmischer mit 12 Teilen des Natriumsalzes der 2-(Octadecanoyl-2-methylamino)-ethan-1-sulfonsäure bei 1200 U/min. für 15 Minuten gemischt. 600 Teile des so behandelten Calciumcarbonats werden mit 900 Teilen des ebenfalls gleichen Polyoxymethylens gemischt, und die Mischung wird wie in Beispiel 1 beschrieben weiterverarbeitet.

Die Eigenschaften der Prüfkörper sind in Tabelle I aufgeführt.

Beispiele 13-15

800 Teile des in Beispiel 1 beschriebenen Calciumcarbonats werden in einem Schnellaufmischer mit verschiedenen Mengen eines sek. Na-n-alkansulfonats (Kettenverteilung : 3 % $C_{13}$, 25 % $C_{14}$, 30 % $C_{15}$, 25 % $C_{16}$, 15 % $C_{17}$, 2 % $C_{18}$) bei 800 U/min. für 30 Minuten bei Raumtemperatur gemischt.

Das so behandelte Calciumcarbonat wird mit 1 200 Teilen des im Beispiel 1 beschriebenen Polyoxymethylens in einem Pflugschaufelmischer gut vermischt. Die Weiterverarbeitung erfolgt wie im Beispiel 1 beschrieben.

In einem Vergleichsbeispiel wird unbehandeltes Calciumcarbonat mit Polyoxymethylen im Verhältnis 2 : 3 gemischt und wie beschrieben weiterverarbeitet.

Die Eigenschaften der Prüfkörper sind in Tabelle II aufgeführt.

(Siehe Tabelle I Seite 8 f.)

Tabelle I

| Beispiel | Haftvermittler | Dehnung % | Zugfestigkeit N/mm² | Schlagzähigkeit mJ/mm² | Kerbschlagzähigkeit mJ/mm² | Schlagzugzähigkeit mJ/mm² | Fallbolzenversuch g |
|---|---|---|---|---|---|---|---|
| Vergleich | ——— | 13 | 37 | 20 | 1,4 | 75 | 215 |
| 1 | Na-hexadec-2-en-1-sulfonat | 26 | 35 | 24 | 1,7 | 95 | 235 |
| 2 | $C_{10-16}H_{21-33}COO(CH_2)_3-SO_3Na$ | 22 | 35 | 24 | 2,3 | 100 | 260 |
| 3 | $C_{14}H_{29}CH(OH)CH_2-SO_3Na$ | 22 | 35 | 27 | 2,1 | 100 | 250 |
| 4 | $C_{13}H_{27}CH=CH-CH_2SO_3Na$ | 26 | 33 | 31 | 2,3 | 120 | 280 |
| 5 | sek. Na-n-alkansulfonat | 30 | 35 | 35 | 2,4 | 120 | 380 |
| 6 | $C_{12}H_{25}-CH=CH-CH_2SO_3K$ | 27 | 34 | 28 | 2,1 | 95 | 260 |
| 7 | $C_{14}H_{29}CH(OCOCH_3)-CH_2-SO_3Na$ | 27 | 33 | 26 | 2,0 | 100 | 250 |
| 8 | $C_{10-16}H_{21-33}CONH(CH_2)_2-SO_3NA$ | 26 | 34 | 26 | 2,0 | 95 | 250 |
| 9 | Na-2(Oleoylamino)-ethan-1-sulf. | 26 | 35 | 29 | 2,2 | 100 | 270 |
| 10 | sek. Na-n-alkansulfonat | 30 | 35 | 35 | 2,5 | 120 | 380 |
| 11 | $C_{12}H_{25}-O-(CH_2-CH_2-O)_2-SO_3Na$ | 26 | 33 | 28 | 2,3 | 100 | 280 |
| 12 | $C_{18}H_{37}$ $CO-N(CH_3)-(CH_2)_2-SO_3Na$ | 28 | 34 | 29 | 2,3 | 100 | 280 |

Tabelle II

| Beispiel | Gehalt Haftvermittler[1] % | Schlagzähigkeit mJ/mm² | Kerbschlagzähigkeit mJ/mm² | Schlagzugzähigkeit mJ/mm² | Fallbolzenversuch g |
|---|---|---|---|---|---|
| Vergl. | - | 20 | 1,4 | 75 | 215 |
| 13 | 0,5 | 28 | 2,1 | 110 | 360 |
| 14 | 1,0 | 35 | 2,4 | 120 | 380 |
| 15 | 2,0 | 35 | 2,3 | 120 | 380 |

1) bezogen auf Füllstoffmenge

Beispiel 16

900 Teile des im Beispiel 1 beschriebenen Polyoxymethylens und 1,5 Teile eines sek. Na-n-alkansulfonats (Kettenverteilung wie im Beispiel 10) werden in einem Schnellaufmischer bei 1200 U/min. für 15 Minuten bei Raumtemperatur gemischt. Danach wird das so behandelte Polyoxymethylen mit 100 Teilen Calciumcarbonat mit einem mittleren Teilchendurchmesser von 2,5 µm und einer spezifischen Oberfläche (nach BET) von 2 m²/g in einem Pflugschaufelmischer vermischt. Die Weiterverarbeitung erfolgt wie im Beispiel 1 beschrieben.

In einem Vergleichsbeispiel wird Polyoxymethylen mit dem beschriebenen Calciumcarbonat im Verhältnis 1 : 9 gemischt und wie beschrieben weiterverarbeitet.

Die Eigenschaften der Prüfkörper sind in Tabelle III aufgeführt.

Tabelle III

| | | Vergleich | Beispiel 16 |
|---|---|---|---|
| Dehnung | % | 26 | 30 |
| Zugfestigkeit | N/mm² | 55 | 49 |
| Schlagzähigkeit | mJ/mm² | 48 | 67 |
| Kerbschlagzähigkeit | mJ/mm² | 3,1 | 3,7 |
| Schlagzugzähigkeit | mJ/mm² | 160 | 200 |
| Fallbolzenversuch | g | 63 | 88 |

Beispiel 17

400 Teile Calciumcarbonat mit einem mittleren Teilchendurchmesser von 4 µm werden mit 10 Teilen eines sek. Na-n-alkansulfonats (Kettenverteilung wie im Beispiel 10) in einem Schnellaufmischer bei 1 000 U/min. für 20 Minuten bei Raumtemperatur gemischt. Nach Zugabe von 1 600 Teilen des im Beispiel 1 beschriebenen Polyoxymethylens wird noch 5 Minuten weitergemischt. Die Weiterverarbeitung erfolgt wie im Beispiel 1 beschrieben.

In einem Vergleichsbeispiel wird unbehandeltes Calciumcarbonat mit Polyoxymethylen im Verhältnis 2 : 8 in gleicher Weise gemischt.

Die Eigenschaften der Prüfkörper sind in Tabelle IV aufgeführt.

Tabelle IV

| | | Vergleich | Beispiel 17 |
|---|---|---|---|
| Dehnung | % | 24 | 30 |
| Zugfestigkeit | N/mm² | 48 | 46 |
| Schlagzähigkeit | mJ/mm² | 36 | 51 |
| Kerbschlagzähigkeit | mJ/mm² | 2,6 | 3,4 |
| Schlagzugzähigkeit | mJ/mm² | 130 | 160 |
| Fallbolzenversuch | g | 80 | 128 |

Beispiel 18

400 Teile eines gefällten Calciumcarbonats mit einem mittleren Teilchendurchmesser von 0,2 µm und einer spezifischen Oberfläche (nach BET) von 9 m²/g werden mit 6 Teilen eines sek. Na-n-alkansulfonats (Kettenverteilung wie im Beispiel 10) in einem Schnellaufmischer bei 1 200 U/min. für 10 Minuten bei Raumtemperatur gemischt. Nach Zugabe von 1 600 Teilen des im Beispiel 1 beschriebenen Polyoxymethylens wird noch 5 Minuten weiter gemischt. Die Weiterverarbeitung erfolgt wie im Beispiel 1 beschrieben.

In einem Vergleichsbeispiel wird das unbehandelte gefällte Calciumcarbonat mit Polyoxymethelen im Verhältnis 2 : 8 in gleicher Weise gemischt.

Die Eigenschaften der Prüfkörper sind in Tabelle V aufgeführt.

Beispiel 19

Das Beispiel 18 wird wiederholt, nur daß anstelle des sek. Na-n-alkansulfonats 6 Teile der Verbindung $C_{10-16}H_{21-33}—COO—CH_2—CH_2—SO_3—Na$ eingesetzt werden.

Die Weiterverarbeitung des Gemisches erfolgt wie im Beispiel 1 beschrieben.

Die Eigenschaften der Prüfkörper sind in Tabelle V aufgeführt.

Tabelle V

| | | Vergl. | Bsp. 18 | Bsp. 19 |
|---|---|---|---|---|
| Dehnung | % | 11 | 16 | 16 |
| Zugfestigkeit | N/mm² | 56 | 52 | 50 |
| Schlagzähigkeit | mJ/mm² | 20 | 32 | 29 |
| Kerbschlagzähigkeit | mJ/mm² | 2,0 | 2,8 | 2,7 |
| Schlagzugzähigkeit | mJ/mm² | 100 | 130 | 120 |
| Fallbolzenversuch | g | 75 | 125 | 120 |

Beispiel 20

800 Teile eines gefällten Calciumcarbonats mit einem mittleren Teilchendurchmesser von 1 µm werden mit 12 Teilen eines sek. Na-n-alkansulfonats (Kettenverteilung wie im Beispiel 10) in einem Schnellaufmischer bei 1 200 U/min. für 10 Minuten bei Raumtemperatur gemischt. Nach Zugabe von 1 200 Teilen des im Beispiel 1 beschriebenen Polyoxymethylens wird noch 5 Minuten weiter gemischt. Die Weiterverarbeitung erfolgt wie im Beispiel 1 beschrieben.

In einem Vergleichsbeispiel wird unbehandeltes gefälltes Calciumcarbonat mit Polyoxymethylen im Verhältnis 4 : 6 in gleicher Weise gemischt.

Die Eigenschaften der Prüfkörper sind in Tabelle VI aufgeführt.

Beispiel 21

Das Beispiel 20 wird wiederholt, nur daß anstelle des sek. Na-n-alkansulfonats 12 Teile der Verbindung $C_{10-16}H_{21-33}—CO—NH—CH_2—CH_2—SO_3—Na$ eingesetzt werden.

Die Weiterverarbeitung des Gemisches erfolgt wie im Beispiel 1 beschrieben. Die Eigenschaften der Prüfkörper sind in Tabelle VI aufgeführt.

Tabelle VI

| | | Vergl. | Bsp. 20 | Bsp. 21 |
|---|---|---|---|---|
| Dehnung | % | 5 | 14 | 12 |
| Zugfestigkeit | N/mm² | 38 | 35 | 37 |
| Schlagzähigkeit | mJ/mm² | 8 | 25 | 20 |
| Kerbschlagzähigkeit | mJ/mm² | 1,3 | 2,1 | 1,9 |
| Schlagzugzähigkeit | mJ/mm² | 70 | 100 | 90 |
| Fallbolzenversuch | g | 125 | 220 | 210 |

Beispiel 22

400 Teile des im Beispiel 1 beschriebenen Calciumcarbonats, 600 Teile des im Beispiel 1 beschriebenen Polyoxymethylens und 6 Teile sek. Na-n-alkansulfonat (Kettenverteilung wie im Beispiel 10) werden in einem Schnellaufmischer bei 1 200 U/min. für 10 Minuten bei Raumtemperatur gemischt. Die Weiterverarbeitung erfolgt wie im Beispiel 1 beschrieben. Als Vergleich dient eine Mischung aus 400 Teilen Calciumcarbonat und 600 Teilen Polyoxymethylen.

Die Eigenschaften der Prüfkörper sind in Tabelle VII aufgeführt.

Tabelle VII

| | | Vergleich | Beispiel 22 |
|---|---|---|---|
| Dehnung | % | 13 | 30 |
| Zugfestigkeit | N/mm² | 37 | 35 |
| Schlagzähigkeit | mJ/mm² | 20 | 35 |
| Kerbschlagzähigkeit | mJ/mm² | 1,4 | 2,5 |
| Schlagzugzähigkeit | mJ/mm² | 75 | 120 |
| Fallbolzenversuch | g | 215 | 380 |

Beispiel 23

600 Teile des im Beispiel 1 beschriebenen Calciumcarbonats werden mit 9 Teilen eines sek. Na-n-alkansulfonats (Kettenverteilung wie im Beispiel 10) in einem Schnellaufmischer bei 1 200 U/min. für 15 Minuten bei Raumtemperatur gemischt. Nach Zugabe von 400 Teilen des im Beispiel 1 beschriebenen Polyoxymethylens wird noch 5 Minuten weiter gemischt. Die Weiterverarbeitung erfolgt wie im Beispiel 1 beschrieben. Als Vergleich dient eine Mischung aus 600 Teilen Calciumcarbonat und 400 Teilen Polyoxymethylen.

Die Eigenschaften der Prüfkörper sind in Tabelle VIII aufgeführt.

Tabelle VIII

| | | Vergleich | Beispiel 23 |
|---|---|---|---|
| Dehnung | % | 1 | 14 |
| Zugfestigkeit | N/mm² | 56 | 29 |
| Schlagzähigkeit | mJ/mm² | 4 | 15 |
| Kerbschlagzähigkeit | mJ/mm² | 0,9 | 1,7 |
| Schlagzugzähigkeit | mJ/mm² | 55 | 85 |
| Fallbolzenversuch | g | 230 | 480 |

Beispiele 24-26

In diesen Beispielen sind die erfindungsgemäßen Haftvermittler gebräuchlichen Haftvermittlern gegenübergestellt. Es werden jeweils Mischungen aus 400 Teilen Calciumcarbonat des Beispiels 1 behandelt mit 4 Teilen Haftvermittler und 600 Teile Polyoxymethylen des Beispiels 1 hergestellt und weiterverarbeitet wie im Beispiel 1 beschrieben. Dabei steht Beispiel 5 für die erfindungsgemäßen haftvermittler. Bei Beispiel 24 wird Stearinsäure eingemischt, wie in den Beispielen 2-9 beschrieben. Bei Beispiel 25 wird γ-Glycidoxypropyl-trimethoxysilan, bei Beispiel 26 Isopropoxy-tri-isostearoyltitanat unverdünnt aus einer Zerstäubungsvorrichtung aufgesprüht wie im Beispiel 10 beschrieben.
Die Eigenschaften der Prüfkörper sind in Tabelle IX aufgeführt.

Tabelle IX

| | | Bsp.5 | Bsp. 24* | Bsp.25* | Bsp.26* |
|---|---|---|---|---|---|
| Dehnung | % | 30 | 22 | 13 | 24 |
| Zugfestigkeit | $N/mm^2$ | 35 | 36 | 37 | 33 |
| Schlagzähigkeit | $mJ/mm^2$ | 35 | 27 | 20 | 27 |
| Kerbschlagzähigkeit | $mJ/mm^2$ | 2,4 | 1,9 | 1,5 | 1,9 |
| Schlagzugzähigkeit | $mJ/mm^2$ | 120 | 90 | 80 | 100 |
| Fallbolzenversuch | g | 380 | 240 | 215 | 240 |

* Vergleich

Beispiel 27

In Tabelle X sind die Gelbwerte von Spritzplatten, gemessen nach DIN 6167 aufgeführt. Hierbei wird, wie im Beispiel 14 beschrieben, 1 % des dort benutzten sek. Na-n-alkansulfonats mit verschiedenen Calciumcarbonaten gemischt.

Tabelle X

| Calciumcarbonat aus Beispiel | Gehalt $CaCO_3$ % | Haftvermittler | Gelbwert |
|---|---|---|---|
| 1 | 60 | − | 36,5 |
| 1 | 60 | + | 17,9 |
| 16 | 10 | − | 29,6 |
| 16 | 10 | + | 20,3 |
| 16 | 20 | − | 38,8 |
| 16 | 20 | + | 22,2 |
| 16 | 40 | − | 43,1 |
| 16 | 40 | + | 24,5 |
| 17 | 20 | − | 26,0 |
| 17 | 20 | + | 13,0 |

Beispiel 28

600 Teile Calciumcarbonat mit einem mittleren Teilchendurchmesser von 3 µm und einer spezifischen Oberfläche (nach BET) von 2,5 $m^2/g$ werden in einem Schnellaufmischer mit 9 Teilen sek. Na-n-alkansulfonat (C-Kettenverteilung wie im Beispiel 10) bei Raumtemperatur für 10 Minuten gemischt. Nach Zugabe von 1 400 Teilen des im Beispiel 1 beschriebenen Polyoxymethylens wird noch 5 Minuten weiter gemischt.

Das erhaltene Gemisch wird in einem Zweischneckenextruder vom Typ LSM 30/34 der Firma Leistritz aufgeschmolzen. Die Schmelze wird über eine Düse ausgepreßt, als Strang abgezogen und mit einer Schneidvorrichtung granuliert.

In einem Vergleichsbeispiel werden 600 Teile unbehandeltes Calciumcarbonat mit 1 400 Teilen Polyoxymethylen auf die gleiche Weise gemischt. Das Gemisch wird wie vorstehend beschrieben, weiter verarbeitet unter denselben Extrusionsbedingungen. In Tabelle XI sind die Durchsätze bei jeweils gleicher Leistungsaufnahme des Extruders aufgeführt.

Beispiel 29

Das Beispiel 28 wird wiederholt, nur daß ein gefälltes Calciumcarbonat mit einem mittleren Teilchendurchmesser von 0,2 µm und einer spezifischen Oberfläche (nach BET) von 9 $m^2/g$ eingesetzt wird.

Tabelle XI

| | Durchsatz kg/h |
|---|---|
| Beispiel 28 | 6,0 |
| Vergleich zu Beispiel 28 | 5,2 |
| Beispiel 29 | 6,7 |
| Vergleich zu Beispiel 29 | 4,8 |

**Patentansprüche**

1. Formmasse bestehend aus 90-20 Gewichtsteilen eines Polyoxymethylens, 10-80 Gewichtsteilen eines Erdalkalicarbonats, gegebenenfalls üblichen Zusatzstoffen, sowie 0,1-10 Gew.-%, bezogen auf das Erdalkalicarbonat, eines Haftvermittlers, dadurch gekennzeichnet, daß sie als Haftvermittler eine schwefelorganische Verbindung der Formel

$$R—SO_3—Me \qquad (I)$$

enthält, worin R für folgende Reste steht, geradkettiger oder verzweigter Alkylrest mit 6 bis 35 Kohlenstoffatomen oder ein Cycloalkylrest oder Alkenylrest mit jeweils 6 bis 22 Kohlenstoffatomen, wobei der Alkenylrest mindestens eine Doppelbindung enthält und alle diese Reste durch Hydroxygruppen oder die Reste $—OCOR^1$ oder $—COOR^1$, in denen $R^1$ einen geradkettigen oder verzweigten Alkylrest mit 1 bis 6 Kohlenstoffatomen darstellt, substituiert sein können, Alkylarylrest mit 7 bis 22 Kohlenstoffatomen, der in vorstehender Weise substituiert sein kann, $R^2—O(CH_2CH_2O)_m—$, worin $R^2$ einen Alkylrest mit 6 bis 22 Kohlenstoffatomen und m gleich 1 bis 4 bedeutet, $R^2—CO—O(CH_2)_n—$, worin $R^2$ die vorstehende Bedeutung hat und n gleich 2 bis 6 ist,

$$R^2\text{-CO-}\underset{R_3}{\underset{|}{N}}\text{-}(CH_2)_n,$$

worin $R^2$ und n die vorstehende Bedeutung haben und $R_3$ für Wasserstoff oder einen geradkettigen oder verzweigten Alkylrest mit 1 bis 6 Kohlenstoffatomen steht, und Me ein Alkali- oder Erdalkalimetallion bedeutet.

2. Formmasse nach Anspruch 1, dadurch gekennzeichnet, daß die Menge an Haftvermittler 0,5 bis 2 Gew.-% beträgt.

3. Formmasse nach Anspruch 1 und 2, dadurch gekennzeichnet, daß das Erdalkalicarbonat ein Calciumcarbonat ist.

4. Verfahren zur Herstellung einer Füllstoff enthaltenden Kunststoff-Formmasse bestehend aus 90-20 Gewichtsteilen eines Polyoxymethylens, 10-80 Gewichtsteilen eines Erdalkalicarbonats, gegebenenfalls üblichen Zusatzstoffen, sowie 0,1-10 Gew.-%, bezogen auf das Erdalkalicarbonat, eines Haftvermittlers, durch Mischen der Bestandteile, dadurch gekennzeichnet, daß als Haftvermittler eine schwefelorganische Verbindung der Formel

$$R—SO_3—Me \qquad (I)$$

eingesetzt wird, worin R die Bedeutung gemäß Anspruch 1 besitzt.

5. Verfahren nach Anspruch 4, dadurch gekennzeichnet, daß das Calciumcarbonat zunächst mit dem Haftvermittler behandelt wird.

6. Verwendung der Kunststoff-Formmasse nach Anspruch 1 zur Herstellung von Formteilen.

**Claims**

1. A molding composition comprising 90-20 parts by weight of a polyoxymethylene, 10-80 parts by weight of an alkaline earth metal carbonate, customary additives if appropriate, and 0.1-10 percent by weight, relative to the alkaline earth metal carbonate, of an adhesion promoter, which contains as adhesion promoter a sulfurorganic compound of the formula

$$R—SO_3—Me \qquad (I)$$

in which R represents the following radicals : straight-chain or branched alkyl radical having 6 to 35 carbon atoms or a cycloalkyl radical or alkenyl radical each having 6 to 22 carbon atoms, and the alkenyl radical contains at least one double bond and all these radicals can be substituted by hydroxyl groups or the radicals $—OCOR^1$ or $—COOR^1$ in which $R^1$ represents a straight-chain or branched alkyl radical having 1 to 6 carbon atoms, an alkylaryl radical having 7 to 22 carbon atoms and which can be substituted in the above manner, $R^2—O(CH_2CH_2O)_m—$ in which $R^2$ denotes an alkyl radical having 6 to 22 carbon atoms and m denotes 1 to 4, $R^2—CO—O—(CH_2)_n—$ in which $R^2$ has the above meaning and n is equal to 2 to 6,

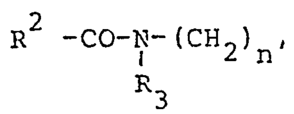

in which $R^2$ and n have the above meaning and $R_3$ represents hydrogen or a straight-chain or branched alkyl radical having 1 to 6 carbon atoms, and Me denotes an alkali metal ion or alkaline earth metal ion.

2. A molding composition as claimed in claim 1, in which the amount of adhesion promoter is 0.5 to 2 percent by weight.

3. A molding composition as claimed in claims 1 and 2, in which the alkaline earth metal carbonate is a calcium carbonate.

4. A process for preparing a filler-containing plastic molding composition comprising 90-20 parts by weight of a polyoxymethylene, 10-80 parts by weight of an alkaline earth metal carbonate customary additives if appropriate, and 0.1-10 percent by weight, relative to the alkaline earth metal carbonate, of an adhesion promoter, by mixing of the constituents, which comprises using as the adhesion promoter a sulfur-organic compound of the formula

$$R—SO_3—Me \qquad (I)$$

in which R has the meaning of claim 1.

5. The process as claimed in claim 4, wherein the calcium carbonate is first treated with the adhesion promoter.

6. The use of a plastic molding composition as claimed in claim 1, for preparing shaped articles.

**Revendications**

1. Matière à mouler consistant en 90-20 parties en poids d'un polyoxyméthylène, 10-80 parties en poids d'un carbonate alcalinoterreux, contenant éventuellement des additifs classiques, ainsi que 0,1-10 % en poids, par rapport au carbonate alcalinoterreux, d'un agent adhésif ou de pontage, ci-après « agent adhésif », caractérisée en ce qu'elle contient comme agent adhésif un composé organosoufré de formule :

$$R—SO_3—Me \qquad (I)$$

dans laquelle R représente les radicaux suivants : radical alkyle à chaîne droite ou ramifiée en $C_6$-$C_{35}$, ou radical cycloalkyle, ou alcényle en $C_6$-$C_{22}$ dans les deux cas, le reste alcényle contenant au moins une double liaison, et tous les radicaux ci-dessus pouvant être substitués par des groupes hydroxy ou les radicaux $—OCOR^1$ ou $—COOR^1$, dans lesquels $R^1$ représente un radical alkyle à chaîne droite ou ramifiée en $C_1$-$C_6$ ; un radical alkylaryle en $C_7$-$C_{22}$, pouvant être substitué comme indiqué ci-dessus ; un radical $R^2$ $—O(CH_2CH_2O)_m—$ où $R^2$ représente un radical alkyle en $C_6$-$C_{22}$, et m vaut 1 à 4 ; un radical de formule $R^2$ $—CO—O(CH_2)_n—$ où $R^2$ est tel que défini ci-dessus, et n vaut 2 à 6 ; un radical de formule

$$R^2 \, -CO-\underset{\substack{| \\ R_3}}{N}-(CH_2)_n,$$

où $R^2$ et n sont tels que définis ci-dessus, et $R_3$ représente un atome d'hydrogène ou un radical alkyle à chaîne droite ou ramifiée en $C_1$-$C_6$, et dans laquelle Me représente un ion de métal alcalin ou alcalinoterreux.

2. Matière à mouler selon la revendication 1, caractérisée en ce que la quantité d'agent adhésif représente 0,5 à 2 % en poids.

3. Matière à mouler selon la revendication 1 ou 2, caractérisée en ce que le carbonate alcalinoterreux est un carbonate de calcium.

4. Procédé de préparation d'une matière à mouler de type matière plastique, contenant une charge, constituée de 90-20 parties en poids d'un polyoxyméthylène, de 10 à 80 % en poids d'un carbonate alcalinoterreux, contenant éventuellement des additifs classiques, ainsi que 0,1-10 parties en poids, par rapport au carbonate alcalinoterreux, d'un agent adhésif, par mélange des composants, caractérisé en ce que l'on utilise comme agent adhésif un composé organosoufré de formule :

$$R—SO_3—Me \qquad (I)$$

dans laquelle R est tel que défini ci-dessus dans la revendication 1.

5. Procédé selon la revendication 4 caractérisé en ce que l'on traite tout d'abord le carbonate de calcium par l'agent adhésif.

6. Utilisation des matières à mouler, du type matière plastique, selon la revendication 1, pour la fabrication d'articles moulés.